(19) **Europäisches Patentamt / European Patent Office / Office européen des brevets**

(11) **EP 2 123 522 B1**

(12) **EUROPEAN PATENT SPECIFICATION**

(45) Date of publication and mention
of the grant of the patent:
**26.08.2020 Bulletin 2020/35**

(51) Int Cl.:
*B60S 1/08* *(2006.01)*          *H02K 29/08* *(2006.01)*

(21) Application number: **09160405.8**

(22) Date of filing: **15.05.2009**

(54) **Electromotive auxiliary drive, particularly a wiper motor**

Elektromotorischer Hilfsantrieb, insbesondere Wischermotor

entraînement auxiliaire par moteur électrique, en particulier moteur d'essuie-glace

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **20.05.2008 DE 102008024356**

(43) Date of publication of application:
**25.11.2009 Bulletin 2009/48**

(73) Proprietor: **Valeo Systèmes d'Essuyage
78322 Le Mesnil Saint Denis (FR)**

(72) Inventors:
• **Dietz, Benjamin
74211, LEINGARTEN (DE)**

• **Bürkle, Jörg
74343, SACHSENHEIM (DE)**
• **Schmid, Bernd
74348, LAUFFEN (DE)**
• **Högler, Eberhard
74391, ERLIGHEIM (DE)**

(74) Representative: **Patentanwälte Behrmann Wagner
PartG mbB
Maggistraße 5
Hegau-Tower (10. OG)
78224 Singen (DE)**

(56) References cited:
**EP-A1- 1 577 182     DE-A1-102005 040 646**

## Description

The invention concerns an electromotive auxiliary drive according to patent claim 1 and specifically in this case to a drive designed for rotary running, for example a wiper motor designed for rotary running.

Electromotive auxiliary drives for vehicles, also particularly in their design as wiper motors, are known in various embodiments. Known in particular are wiper motors also designed for rotary running for generation of the wiping or pivoting movement of wiper arms in windscreen wiper modules by means of crank gears with a crank provided on an output shaft of the wiper motor, which (crank) rotates in a predetermined direction of rotation when the wiper motor is switched on.

Also specifically in such wiper motors designed for rotary running, it is furthermore known to provide a sensor arrangement on the output shaft of the wiper motor generally designed as a geared motor, with which at least one predetermined rotational position or angular position of the output shaft and of the crank and therefore a predetermined pivoting position of the wiper arms of the windscreen wiper module involved can be recognised, in order on reaching this angular position to initiate for example final switching off of the wiper motor after deactivation of the windscreen wiper module once the wiper arms have adopted a parked position corresponding to the predetermined angular position. In known wiper motors designed for rotary running, this sensor arrangement generally consists of sliding contacts acting in conjunction with contact surfaces and only allows recognition in each case of a single angular position precisely allocated to the respective contact surface.

Specifically in the case of so-called reversing wiper motors, the output shaft of which is driven alternately in one direction of rotation and subsequently in the opposite direction of rotation in order to generate the pivoting movement, sensor arrangements are known particularly also for control of the end positions of this reversing movement of the output shaft and therefore for control of the pivoting movement of the wiper arms between the two end or turning positions, which present Hall sensors acting in conjunction with at least one permanent magnet. Also in the case of these known reversing wiper motors, only the angular positions of the rotational and pivoting movement of the output shaft of the wiper motor corresponding exactly in each case to the spatial position of the Hall sensors and/or the permanent magnets are recognised with the sensor arrangement. An electromotive auxiliary drive is known from EP1577182.

The purpose of the invention is to demonstrate an electromotive auxiliary drive and in this case specifically a wiper motor with which, with reduced constructional expenditure, any desired angular position of a shaft of the auxiliary drive, for example of the output shaft of the auxiliary drive, can be recognised and indeed independently of the spatial arrangement of the functional elements forming the sensor arrangement. In order to solve this problem, an electromotive auxiliary drive according to patent claim 1 is developed.

In the electromotive auxiliary drive according to the invention, the functional elements of the sensor arrangement involve at least one permanent magnet in addition to at least two sensor elements responding to a magnetic field. The at least one permanent magnet in addition to the at least two sensor elements are arranged in this case in such a manner that on rotary movement of the shaft of the auxiliary drive, a relative movement between the permanent magnet and the sensor elements occurs, i.e. the permanent magnet moved for example simultaneously with the shaft travels past the immovably arranged sensor elements and namely in such a manner that whenever the permanent magnet is located in the area of a sensor element, i.e. the revolving shaft has reached a rotational position or angular position corresponding to or assigned to the position of this sensor element, the sensor element in question delivers an electrical signal in the form of a pulse, a threshold value or level at its output. The sensor elements are furthermore arranged such that the angular positions of the shaft assigned to these elements are offset by a degree of angle in relation to one another.

The design of the electromotive auxiliary drive according to the invention makes it possible to recognise any desired angular position of the rotating movement of the shaft without modifying the spatial arrangement of the sensor elements, in order to execute corresponding control functions for example on reaching this angular position, e.g. to cause final switching off of the electromotive auxiliary drive and therefore to allow for example a parking position or setting different from the turning position of the wiper arm pivoting position for the wiper arms of a windscreen wiper module.

In the invention, it is in particular not necessary for the angular position to be recognised to coincide with an angular position assigned to a sensor element. Instead, the angular position to be recognised can be selected at will and can be defined by the end of a time interval, which is begun in each case by the signal of a sensor element, i.e. once the rotating shaft has reached the angular position assigned to this sensor element.

The design according to the invention not only makes it possible however to select at will the angular position to be recognised in a particularly simple manner, for example by a software modification, but also, reaching the desired angular position is recognisable by the elapsing of at least one time interval (timer function), which is determined in the simplest case taking account of the phase displacement and of the time interval between the signals delivered by the sensor elements and the cycle time, i.e. of the time of a complete revolution of the shaft or a full cycle duration of the signal of at least one sensor element.

Recurrent events in the output signal of the sensor elements include in the sense of the invention pulses or their forward or rearward edges of pulse-like output signals for example, or however an evolution or level of the respective output signal which is typical of the rotational position of the shaft and to which the output signal returns according to the rotating movement of the shaft, for example a level corresponding to a predetermined threshold value. In this sense, a recurrent event is present in the sensor output signal when the level of this signal exceeds and/or falls below a threshold value which is predetermined or established in control or analysis electronics.

Events of the same type involve for example in the sense of the invention the forward edges of pulses of the pulse-like sensor signals or the rearward edges of these pulses and the moments of the forward and rearward edges. Events of the same type also respectively involve for example in the sense of the invention the output signals exceeding the threshold value predetermined and established in the control or analysis electronics and the moments at which it is exceeded or however the output signals falling below the predetermined threshold value and the moments at which the values fall below the latter.

Further developments, advantages and application possibilities of the invention are also apparent from the following description of examples of embodiment and from the figures. In this case, all the characteristics described and/or illustrated are in themselves or in any desired combination fundamentally a subject of the invention, regardless of their summary in the claims or their backward relation. The contents of the claims are also made an integral part of the description.

The invention is described below in further detail in examples of embodiment based on the figures.

Fig. 1 shows a very simplified presentation of an electromotive auxiliary drive (wiper motor) of a windscreen wiper module otherwise not illustrated for vehicles and the output shaft of this drive equipped with a crank;

Fig. 2 shows a diagram of the chronological sequence of the electrical output signals of two Hall sensors of a sensor arrangement for recognition of the angular position of the output shaft;

Fig. 3 shows a diagram of the chronological sequence of the electrical output signals of two Hall sensors of a sensor arrangement and control signals derived from the latter in a further embodiment of the invention.

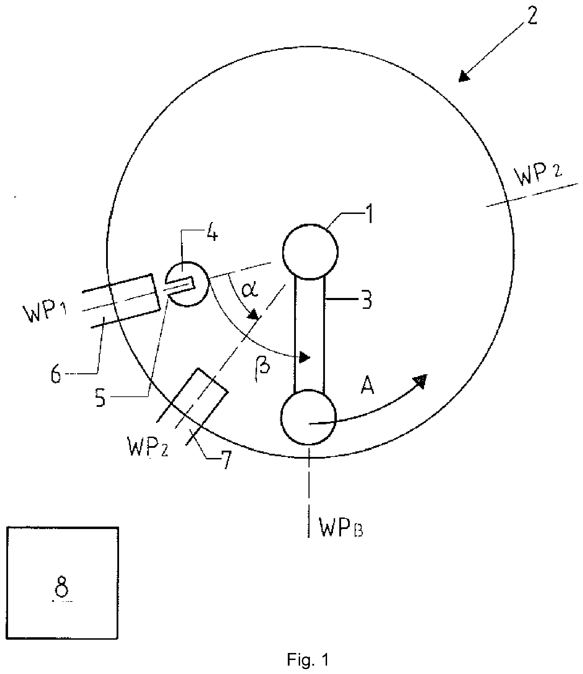

In figure 1, 1 denotes the output shaft of an electromotive auxiliary drive or wiper motor 2 (geared motor) designed for rotary running of an otherwise not further illustrated windscreen wiper module for vehicles. A crank 3 is attached to the output shaft 1 which (crank), is continuously driven in rotary motion with the output shaft 1 in the direction of the arrow A when the wiper motor 2 is switched on or the windscreen wiper module is activated.

The wiper arm of the windscreen wiper module is pivoted in the familiar fashion with the rotating crank 3 by means of a linkage and to be more precise between a first turning position of the wiper arm pivoting movement, which (turning position) corresponds to the angular position $WP_1$ of the output shaft 1 and a second turning position of the wiper arm pivoting movement, which (turning position) corresponds to the angular position $WP_2$ of the output shaft 1..

In order to detect the angular position of the output shaft 1, in the embodiment illustrated, a permanent magnet 4 is arranged on the latter or on a wheel connected to the output shaft 1, e.g. a pinion of the wiper motor 2, which (magnet) forms a magnetic gap or air gap and pole transition 5 with a very precisely oriented magnetic field between an N pole and S pole and acts in conjunction with two Hall sensors 6 and 7 which do not rotate with the output shaft 1.

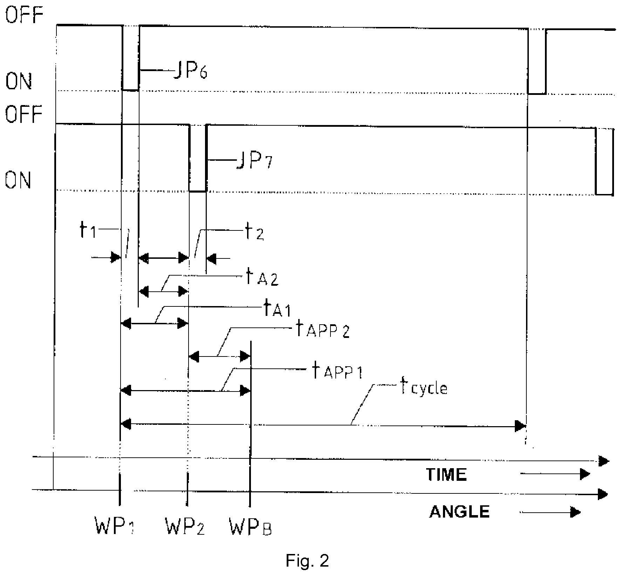

The two Hall sensors 6 and 7, which form a sensor arrangement with the permanent magnet 4, are arranged offset in relation to one another in the direction of rotation A of the output shaft 1 by a degree of angle a on a housing section of the wiper motor 2, on a housing cover made of plastic for example, or on a printed circuit board fixed in the housing cover for example and to be more precise in such a way that each Hall sensor 6 and 7, when the pole transition 5 oriented radially to the axis of the output shaft 1 in the embodiment presented travels past, issues a pulse-like output signal AS6 and AS7 and namely according to figure 2 in the form of a sequence of negative voltage pulses IP6 (output signal AS6 of Hall sensor 6) and IP7 (output signal AS6 of Hall sensor 7) and to be more precise with a pulse width $t_1$ (pulse IP6) and $t_2$ (pulse IP7). The output signal AS7 and its pulses IP7 are phase-displaced and time-displaced in relation to the output signal and the pulses IP6 and indeed according to the angular interval $\alpha$.

In the embodiment presented, the Hall sensor 6 is arranged such that the forward edge of each pulse IP6 coincides with a rotational position or angular position $WP_1$ of the output shaft 1 corresponding to the first turning position.

In the embodiment presented, the Hall sensor 7 is arranged such that the forward edge of each pulse IP7 generated by this sensor coincides with an additional angular position $WP_Z$ of the output shaft 1 which is offset in relation to the angular position $WP_2$ corresponding to the angular interval of both Hall sensors 6 and 7.

Consequently, in the diagram in figure 2, the forward edge of the pulse IP6 is likewise denoted by $WP_1$ and the front edge of the pulse IP7 is denoted by $WP_Z$.

The pulse widths $t_1$ and $t_2$ of the two pulses IP6 and IP7 in addition to the time interval between these pulses and their phase displacement depend on the rotation speed of the output shaft 1. This rotation speed may be different as a result of the most diverse parameters, for example depending on the load on the wiper motor 2 and also in particular as a result of the condition of the vehicle screen and/or the wiper blades, changes in the voltages of the vehicle on-board power supply, etc.

$WP_B$ denotes any desired angular position and rotational position of the output shaft deviating from the

angular position $WP_1$ and the angular position $WP_Z$, which (angular position) presents an angular interval $\beta$ from the angular position $WP_1$. This angular position $WP_B$ can be calculated and determined as a time interval $t_{APP1}$ and $t_{APP2}$ and namely also as a function of the time parameters $t_1, t_2, t_{A1}, t_{A2}$ and $t_{Cycle}$, with $t_{A1}$ being the interval between the forward edges of pulses IP6 and IP7 and $t_{A2}$ being the interval between the rearward edge of the pulse IP6 and the forward edge of the pulse IP7.

For the time interval $t_{APP1}$ from the forward edge of the respective pulse IP6, which (time interval) corresponds to the arbitrary angular position $WP_B$ of the rotating movement of the output shaft 1 and for the time interval $t_{APP1}$ in question, the following applies in the simplest case:

$$t_{APP1} = \beta/\alpha \, t_{A1}$$

where

$$\alpha = 360 \, t_{A1}/t_{Cycle}.$$

For the time interval $t_{APP2}$ from the forward edge of the respective pulse IP6, which (time interval) corresponds to the arbitrary angular position $WP_B$ of the rotating movement of the output shaft 1 and for the time interval $t_{APP1}$ in question, the following applies in the simplest case:

$$t_{APP2} = (\beta/\alpha - 1) \, t_{A1}$$

where

$$\alpha = 360 \, t_{A1}/t_{Cycle}.$$

Calculation of the time spans and time intervals $t_{APP1}$ and $t_{APP2}$ is preferably performed taking account of all time parameters $t_1, t_2, t_{A1}, t_{A2}$ and $t_{Cycle}$, so that the arbitrary angular position $WP_B$ can be determined and/or initiated with a very high degree of accuracy, for example for final switching off of the windscreen wiper drive and/or initiation of other functions.

The arbitrary angular position $WP_B$ of the rotating movement of the output shaft 1 therefore definable using a simple sensor arrangement that only requires two Hall sensors 6 and 7 in addition to a permanent magnet 4 and by time measurement and time control also using the aforementioned time parameters $t_1, t_2, t_{A1}, t_{A2}$ and $t_{Cycle}$ with a simple program stored in control electronics 8 and namely for time-controlled initiation and/or termination of controlled processes, for example halting the pivoting movement of the wiper arms of the windscreen wiper module by switching off the wiper motor 2 following deactivation of the windscreen wiper module, so that the wiper arms are pivoted respectively into a resting or parked position after deactivation of the windscreen wiper module that does not correspond to the turning position 1, but instead forms an angle with the latter.

It was assumed above that the sensors or Hall sensors 6 and 7 acting in conjunction with the permanent magnet 4 respond to the phase transition between the N pole and S pole of the permanent magnet 4 and therefore issue a pulse-like output signal AS6 and AS7 and a pulse-like voltage, with the moment of the forward and/or rearward edge constituting the first and second events for determination of the angular position $WP_B$.

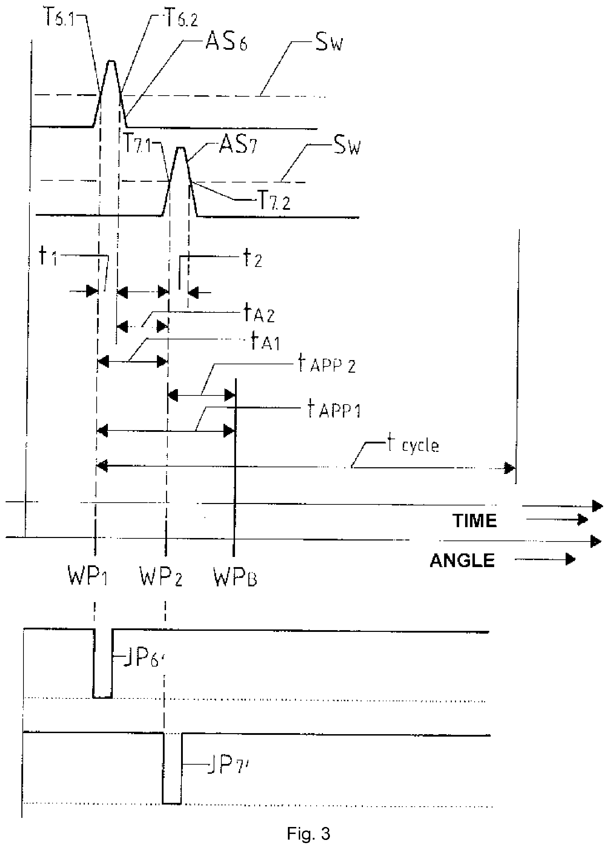

As illustrated in figure 3, it is also possible to use sensors responding to the magnetic field of at least one permanent magnet, for example Hall sensors 6 and 7 (also analogous Hall sensors), that respectively issue an electric output signal AS6 (output signal of sensor 6) and AS7 (output signal of sensor 7) which changes depending on the rotational position of the output shaft 1, for example in the form of a voltage that changes in level. In order to determine the angular position $WP_B$ of the rotating movement of the shaft 1, whenever for example in the control electronics 8 the output signal AS6 or AS7 of the respective sensor 6 or 7 exceeds and/or falls below a predetermined level or threshold value SW, the moment in time $T_{6.1}, T_{6.2}$ and $T_{7.1}, T_{7.2}$ is assessed as the decisive event for determination of the angular position $WP_B$, so that based on the time interval between two events $T_{6.1}$ and $T_{7.1}$ or based on the time interval of at least two internal control signals generated at these moments in time, taking account of the initial angular position $WP_1$ and the spatial angular interval $\alpha$ of the at least two sensor elements 6 and 7, the arbitrary angular position ($WP_B$) of the rotating movement of the shaft 1 can be determined.

If first internal control signals corresponding to the events $T_{6.1}, T_{6.2}$ and $T_{7.1}, T_{7.2}$ are formed respectively when the output signal of the sensor 6 or 7 in question exceeds a predetermined threshold value SW and second internal control signals are formed when the output signal of the sensor element 6 or 7 in question falls below a predetermined threshold value SW, it is also possible, for further improvement of the accuracy of determination of the angular position $WP_B$, to include the time interval between the respective first and second control signals and between the respective first and second moments in time $T_{6.1}$ and $T_{6.2}$ and $T_{7.1}$ and $T_{7.2}$ in calculation of the time interval of the angular position $WP_B$ from the initial angular position $WP_1$ and namely analogously to the pulse width t1 and t2.

It is also possible in this case in particular to form an internal control signal presenting the pulses IP6' and IP7' respectively in the control electronics 8 by monitoring the level of the output signals AS6 and AS7 of the sensors 6 and 7 and namely in such a way that the forward edge of the pulses is generated respectively in this case when the level of the output signal of the sensor 6 or 7 in question exceeds a predetermined threshold value SW, i.e. at the moment $T_{6.1}$ and $T_{7.1}$ and the rearward edge of the pulse IP6' and IP7' is formed when the level of the output signal AS6 and AS7 falls below a predetermined threshold value SW, i.e. at the moment $T_{6.2}$ and $T_{7.2}$. The internal pulse signals received in this manner are then processed for example in the manner described above in connection with figure 2 and namely for determination of the time interval $t_{APP1}$ and $t_{APP2}$ corresponding to the arbitrary angular position $WP_B$ of the rotating movement of the shaft 1.

It is also possible in turn to design the sensors 6 and 7 as threshold value sensors, which respectively issue for example a pulse-like output signal AS6 and AS7 with pulses IP6 and IP7, the forward edge of which is generated when the magnetic field changing with the rotary movement of the shaft 1 in the magnetic force on the sensor element 6 and 7 or a primary electrical signal derived from the magnetic field exceeds or falls below a predetermined threshold value and the rear edge of which is generated when the magnetic field changing with the rotary movement of the shaft 1 in the magnetic force on the sensor element 6 and 7 or a primary electrical signal derived from the magnetic field exceeds or falls below a predetermined threshold value. Taking account of the initial angular position $WP_1$, the spatial angular interval $\alpha$ of both sensor elements 6 and 7 and the time interval between the output signals of these sensors 6 and 7 due to the phase displacement of the output signals of the sensor elements, it is in turn possible to establish and determine the time interval $t_{APP1}$ and $t_{APP2}$ corresponding to the arbitrary angular position $WP_B$ of the rotating movement of the shaft 1 in the manner described above in connection with figure 2.

The invention has been described above based on an example of embodiment. It is understood that a large number of modifications and variations are possible without departing as a result from the inventive concept on which the invention is based.

It was assumed above that the Hall sensor 6 and the permanent magnet 4 are arranged in such a way that the pulses IP6 and their forward edges and the events $T_{6.1}$ and $T_{7.1}$ corresponding to these forward edges coincide with the angular position $WP_1$ of the output shaft 1 corresponding to the turning position I. Any other arrangement of the angular position WP1 used as the initial position and the pulses IP6 and IP7 or events $T_{6.1}$ and $T_{7.1}$ and/or $T_{6.2}$ and $T_{7.2}$ in relation to the rotational position of the output shaft 1 is also possible of course. In these cases also, the arbitrary angular position $WP_B$ taking account of the spatially defined arrangement of the Hall sensors 6 and 7 and the defined arrangement of the permanent magnet 4 in relation to the output shaft 1 can be determined and controlled by measurement of the time parameters $t_1$, $t_2$, $t_{A1}$, $t_{A2}$ and $t_{Cycle}$ and by calculation of the time intervals $t_{APP1}$ and $t_{APP2}$.

It was assumed above that the sensor elements acting in conjunction with the permanent magnet 4 are Hall sensors. Other sensors or sensor elements responding to a magnetic field may be used in the same manner.

It was assumed above that the sensor arrangement consists of at least two sensor elements 6 and 7 and of a permanent magnet 4 with a pole transition 5. It is also fundamentally possible to provide for a permanent magnet arrangement formed of at least one permanent magnet which presents at least two pole transitions, also with a polar field pattern for example and/or generates a magnetic field, which has at least two areas of different magnetic polarity and/or magnetic force acting in conjunction with the sensor elements 6 and 7. In this embodiment, it is also subsequently possible to dispense with one of the two sensor elements, sensor element 7 for example and determine the arbitrary angular position $WP_B$ and the times $t_{APP1}$ and $t_{APP2}$ taking account of the time/angular interval between the at least two pole transitions and/or the at least two areas of different magnetic polarity and/or magnetic strength, for example by detection of the ascending and descending edges or by detecting when a value exceeds or falls below a threshold value of the output signal. Furthermore, it is also possible to make provision for additional sensor elements in order to determine further time-angle dependencies.

**Claims**

1. Electromotive auxiliary drive for vehicles, for example wiper motor (2), with a shaft (1) driven circularly in a direction of rotation (A) when the drive is switched on and with a sensor arrangement for recognition of the rotational position of the shaft (1), **characterized in that**, the sensor arrangement, which presents at least one sensor element (6, 7) acting in conjunction with a magnetic field of at least one permanent magnet (4), with a rotating shaft (1) and with a thereby induced relative movement between the at least one permanent magnet (4) and the at least one sensor element (6, 7), issues phase-displaced or time-displaced output signals (AS6, AS7)

   and **in that** a control device (8) is provided, which determines, taking account of the phase displacement of the output signals (AS6, AS7) or of a time interval corresponding to the phase displacement of recurrent events (IP6, IP7; T6.1, T6.2, T1.1, T1.2) occurring in the output signals (AS6, AS7), the time interval (tAPP1, tAPP2) corresponding to an arbitrary angular position (WPs) of the rotating movement of the shaft of the recurrent events of at least one output signal (AS6, AS7) of sensor element (6, 7) or from an initial angular position (WP1), wherein a crank (3) is attached to the shaft (1), and wherein the crank (3) is continuously driven in one direction when the wiper motor (2) is activated.

**2.** Electromotive auxiliary drive according to claim 1, **characterised in that** the sensor arrangement presents at least two sensor elements (6, 7).

**3.** Electromotive auxiliary drive according to claim 1 or 2, **characterised in that** the sensor arrangement presents at least one permanent magnet (4), the magnetic field of which, at least in its part acting in conjunction with the at least one sensor element (6, 7) presents at least two areas of different magnetic polarity and/or magnetic force and/or at least one area with a magnetic force changing at least once.

**4.** Electromotive auxiliary drive according to one of the above claims, **characterised in that** the sensor arrangement presents at least one permanent magnet (4) that forms at least one pole transition.

**5.** Electromotive auxiliary drive according to one of the above claims, **characterised in that** the control device (8) determines the time interval ($t_{APP1}$, $t_{APP2}$) corresponding to the arbitrary angular position ($WP_B$) of the rotating movement of the shaft of the recurrent events of at least one output signal (AS6, AS7) of a sensor element (6, 7) or of the initial angular position ($WP_1$) taking account of a spatial angular interval ($\alpha$) between the at least two sensor elements (6, 7) and/or the at least two areas of different magnetic polarity and/or magnetic force and/or at least two pole transitions..

**6.** Electromotive auxiliary drive according to claim 5, **characterised in that** the control device (8) for establishment of the angular interval ($\alpha$) between the at least two sensor elements (6, 7) and/or between the at least two areas of different magnetic polarity and/or magnetic force and/or between the at least two pole transitions is formed of the time interval ($t_{A1}$, $t_{A2}$) of the recurrent events (IP6, IP7; $T_{6.1}$, $T_{6.2}$, $T_{7.1}$, $T_{7.2}$) of the at least two output signals (AS6, AS7) of the sensor elements (6, 7) and taking account of a cycle period ($T_{Cycle}$) which corresponds to the cycle duration or the time interval of two sequential events (IP6, IP7; $T_{6.1}$, $T_{6.2}$, $T_{7.1}$, $T_{7.2}$) in the output signal (AS6, AS7) of one and the same sensor element (6, 7) or a multiple thereof.

**7.** Electromotive auxiliary drive according to one of the above claims, **characterised in that** the control device (8) for determination of the time interval ($t_{APP1}$, $t_{APP2}$) corresponding to the arbitrary angular position ($WP_B$) of the rotating movement of the shaft (1) is formed of the recurrent events (IP6, IP7; $T_{6.1}$, $T_{6.2}$, $T_{7.1}$, $T_{7.2}$) of the output signals (AS6, AS7).

**8.** Electromotive auxiliary drive according to one of the above claims, **characterised in that** the control device (8) for determination of the time interval corresponding to the arbitrary angular position ($WP_B$) of the rotating movement of the shaft (1) is formed of the recurrent events (IP6, IP7; $T_{6.1}$, $T_{6.2}$, $T_{7.1}$, $T_{7.2}$) in the output signal (AS6, AS7) of at least one sensor element (6, 7) and namely taking account of the cycle time ($t_{Cycle}$), of the time interval between two recurrent events of a different type in one and the same output signal (AS6, AS7) and of the phase displacement or the time interval ($t_{A1}$, $t_{A2}$) presented by two chronologically sequential events of identical or different type (IP6, IP7; $T_{6.1}$, $T_{6.2}$, $T_{7.1}$, $T_{7.2}$) in the different output signals (AS6, AS7).

**9.** Electromotive auxiliary drive according to one of the above claims, **characterised in that** the output signal (AS6, AS7) of at least one sensor element (6, 7) is a pulse-like signal with pulses (IP6, IP7) and that the recurrent events are these pulses or their forward and/or rearward edges.

**10.** Electromotive auxiliary drive according to one of the above claims, **characterised in that** the output signal (AS6, AS7) of at least one sensor element (6, 7) is a signal changing in level and that the recurrent event in the output signal (AS6, AS7) of at least one sensor element (6, 7) is present when the level of this output signal exceeds and/or falls below a threshold value (SW).

**11.** Electromotive auxiliary drive according to one of the above claims, **characterised in that** events of the same type are respectively the forward or rearward edge of the pulses (IP6, IP7) and/or instances of exceeding or falling below the threshold value (SW) of the output signal (AS6, AS7).

**12.** Electromotive auxiliary drive according to one of the above claims, **characterised in that** at least one sensor element is a Hall sensor (6, 7).

**13.** Electromotive auxiliary drive according to one of the above claims, **characterised in that** in case of execution of the auxiliary drive (2) as a windscreen wiper drive for a pivoting movement of at least one wiper arm between two return or turning positions of a pivoting movement, the sensor arrangement is designed and/or arranged such that the recurrent events (IP6; $T_{6.1}$, $T_{6.2}$) in the output signal (AS6) of a sensor element (6) correspond respectively to a turning position of the wiper arm or to an angular position of the pivoting movement of the wiper arm or of the rotating movement of the shaft (1) offset by a degree of angle in relation to this turning position.

**14.** Electromotive auxiliary drive according to one of the above claims, **characterised in that** the shaft is the output shaft (1) of the drive (2) equipped with a crank (3) for example.

15. Electromotive auxiliary drive according to one of the above claims, **characterised in that** the sensor arrangement supplies at least two output signals (AS6, AS7).

16. Electromotive auxiliary drive according to claim 15, **characterised in that** the sensor arrangement for establishment of several time-angle dependencies presents more than two sensor elements (6, 7) and/or issues more than two output signals (AS6, AS7).

## Patentansprüche

1. Elektromotorischer Hilfsantrieb für Fahrzeuge, beispielsweise Wischermotor (2), mit einer Welle (1), die in einer Drehrichtung (A) kreisförmig angetrieben wird, wenn der Antrieb eingeschaltet ist, und mit einer Sensoranordnung zur Erkennung der Drehstellung der Welle (1), **dadurch gekennzeichnet, dass** die Sensoranordnung, die zumindest ein Sensorelement (6, 7) aufweist, das in Verbindung mit einem Magnetfeld zumindest eines Dauermagneten (4), mit einer Drehwelle (1) und mit einer dadurch induzierten Relativbewegung zwischen dem zumindest einen Dauermagneten (4) und dem zumindest einen Sensorelement (6, 7) arbeitet, phasenverschobene oder zeitverschobene Ausgangssignale (AS6, AS7) ausgibt, und dadurch, dass eine Steuervorrichtung (8) bereitgestellt ist, die unter Berücksichtigung der Phasenverschiebung der Ausgangssignale (AS6, AS7) oder eines Zeitintervalls, das der Phasenverschiebung von in den Ausgangssignalen (AS6, AS7) auftretenden, wiederkehrenden Ereignissen (IP6, IP7; $T_{6.1}$, $T_{6.2}$, $T_{1.1}$, $T_{1.2}$) entspricht, das Zeitintervall ($t_{APP1}$, $t_{APP2}$) bestimmt, das einer willkürlichen Winkelposition (WPs) der Drehbewegung der Welle der wiederkehrenden Ereignisse zumindest eines Ausgangssignals (AS6, AS7) eines Sensorelements (6, 7) oder von einer Ausgangswinkelposition ($WP_1$) entspricht, wobei an der Welle (1) eine Kurbel (3) befestigt ist und wobei die Kurbel (3) kontinuierlich in einer Richtung angetrieben wird, wenn der Wischermotor (2) aktiviert ist.

2. Elektromotorischer Hilfsantrieb nach Anspruch 1, **dadurch gekennzeichnet, dass** die Sensoranordnung zumindest zwei Sensorelemente (6, 7) aufweist.

3. Elektromotorischer Hilfsantrieb nach Anspruch 1 oder 2, **dadurch gekennzeichnet, dass** die Sensoranordnung zumindest einen Dauermagneten (4) aufweist, dessen Magnetfeld zumindest in seinem mit dem zumindest einen Sensorelement (6, 7) zusammenarbeitenden Teil zumindest zwei Bereiche von unterschiedlicher magnetischer Polarität und/oder Magnetkraft und/oder zumindest einen Bereich mit einer sich zumindest einmal ändernden Magnetkraft aufweist.

4. Elektromotorischer Hilfsantrieb nach einem der vorangehenden Ansprüche, **dadurch gekennzeichnet, dass** die Sensoranordnung zumindest einen Dauermagneten (4) aufweist, der zumindest einen Polübergang bildet.

5. Elektromotorischer Hilfsantrieb nach einem der vorangehenden Ansprüche, **dadurch gekennzeichnet, dass** die Steuervorrichtung (8) das Zeitintervall ($t_{APP1}$, $t_{APP2}$), das der willkürlichen Winkelposition ($WP_B$) der Drehbewegung der Welle der wiederkehrenden Ereignisse zumindest eines Ausgangssignals (AS6, AS7) eines Sensorelements (6, 7) oder der Ausgangswinkelposition ($WP_1$) entspricht, unter Berücksichtigung eines räumlichen Winkelabstands ($\alpha$) zwischen den zumindest zwei Sensorelementen (6, 7) und/oder den zumindest zwei Bereichen unterschiedlicher magnetischer Polarität und/oder Magnetkraft und/oder zumindest zwei Polübergängen bestimmt.

6. Elektromotorischer Hilfsantrieb nach Anspruch 5, **dadurch gekennzeichnet, dass** die Steuervorrichtung (8) zur Festlegung des Winkelabstands ($\alpha$) zwischen den zumindest zwei Sensorelementen (6, 7) und/oder zwischen den zumindest zwei Bereichen unterschiedlicher magnetischer Polarität und/oder Magnetkraft und/oder zwischen den zumindest zwei Polübergängen aus dem Zeitintervall ($t_{A1}$, $t_{A2}$) der wiederkehrenden Ereignisse (IP6, IP7; $T_{6.1}$, $T_{6.2}$, $T_{7.1}$, $T_{7.2}$) der zumindest zwei Ausgangssignale (AS6, AS7) der Sensorelemente (6, 7) und unter Berücksichtigung einer Zyklusperiode ($T_{Cycle}$), die der Zyklusdauer oder dem Zeitintervall zweier aufeinanderfolgender Ereignisse (IP6, IP7; $T_{6.1}$, $T_{6.2}$, $T_{7.1}$, $T_{7.2}$) im Ausgangssignal (AS6, AS7) ein und desselben Sensorelements (6, 7) oder eines Vielfachen davon entspricht, gebildet ist.

7. Elektromotorischer Hilfsantrieb nach einem der vorangehenden Ansprüche, **dadurch gekennzeichnet, dass** die Steuervorrichtung (8) zur Bestimmung des Zeitintervalls ($t_{APP1}$, $t_{APP2}$), das der willkürlichen Winkelposition ($WP_B$) der Drehbewegung der Welle (1) entspricht, aus den wiederkehrenden Ereignissen (IP6, IP7; $T_{6.1}$, $T_{6.2}$, $T_{7.1}$, $T_{7.2}$) der Ausgangssignale (AS6, AS7) gebildet ist.

8. Elektromotorischer Hilfsantrieb nach einem der vorangehenden Ansprüche, **dadurch gekennzeichnet, dass** die Steuervorrichtung (8) zur Bestimmung des Zeitintervalls, das der willkürlichen Winkelposition ($WP_B$) der Drehbewegung der Welle (1) entspricht, aus den wiederkehrenden Ereignissen (IP6, IP7; $T_{6.1}$, $T_{6.2}$, $T_{7.1}$, $T_{7.2}$) im Ausgangssignal (AS6, AS7) zumindest eines Sensorelements (6, 7) und insbesondere unter Berücksichtigung der Zykluszeit ($t_{Cycle}$) des Zeitintervalls zwischen zwei wiederkehrenden Ereignissen eines unterschiedlichen Typs in ein und demselben Ausgangssignal (AS6, AS7) und der Phasenverschiebung oder des Zeitintervalls ($t_{A1}$, $t_{A2}$), die durch zwei zeitlich aufeinanderfolgende Ereignisse desselben oder eines unterschiedlichen Typs (IP6, IP7; $T_{6.1}$, $T_{6.2}$, $T_{7.1}$, $T_{7.2}$) in den unterschiedlichen Ausgangssignalen (AS6, AS7) dargestellt sind, gebildet ist.

9. Elektromotorischer Hilfsantrieb nach einem der vorangehenden Ansprüche, **dadurch gekennzeichnet, dass** das Ausgangssignal (AS6, AS7) zumindest eines Sensorelements (6, 7) ein impulsartiges Signal mit Impulsen (IP6, IP7) ist und dass die wiederkehrenden Ereignisse diese Impulse oder deren Vorder- oder Rückflanken sind.

10. Elektromotorischer Hilfsantrieb nach einem der vorangehenden Ansprüche, **dadurch gekennzeichnet, dass** das Ausgangssignal (AS6, AS7) zumindest eines Sensorelements (6, 7) ein sich im Pegel änderndes Signal ist und dass das wiederkehrende Ereignis im Ausgangssignal (AS6, AS7) zumindest eines Sensorelements (6, 7) vorliegt, wenn der Pegel dieses Ausgangssignals einen Schwellenwert (SW) über- und/oder unterschreitet.

11. Elektromotorischer Hilfsantrieb nach einem der vorangehenden Ansprüche, **dadurch gekennzeichnet, dass** Ereignisse desselben Typs jeweils die Vorder- oder Rückflanke der Impulse (IP6, IP7) und/oder Fälle des Über- oder Unterschreitens des Schwellenwerts (SW) des Ausgangssignals (AS6, AS7) sind.

12. Elektromotorischer Hilfsantrieb nach einem der vorangehenden Ansprüche, **dadurch gekennzeichnet, dass** der zumindest eine Sensorelement ein Hallsensor (6, 7) ist.

13. Elektromotorischer Hilfsantrieb nach einem der vorangehenden Ansprüche, **dadurch gekennzeichnet, dass** bei Ausführung des Hilfsantriebs (2) als ein Scheibenwischerantrieb für eine Schwenkbewegung zumindest eines Wischerarms zwischen zwei Rückkehr- oder Wendepositionen einer Schwenkbewegung die Sensoranordnung so gestaltet und/oder angeordnet ist, dass die wiederkehrenden Ereignisse (IP6; $T_{6.1}$, $T_{6.2}$) im Ausgangssignal (AS6) eines Sensorelements (6) jeweils einer Wendeposition des Wischerarms oder einer Winkelposition der Schwenkbewegung des Wischerarms oder der Drehbewegung der Welle (1), die gegenüber dieser Wendeposition um einen Winkelgrad versetzt ist, entsprechen.

14. Elektromotorischer Hilfsantrieb nach einem der vorangehenden Ansprüche, **dadurch gekennzeichnet, dass** die Welle die Abtriebswelle (1) des Antriebs (2) ist, die beispielsweise mit einer Kurbel (3) versehen ist.

15. Elektromotorischer Hilfsantrieb nach einem der vorangehenden Ansprüche, **dadurch gekennzeichnet, dass** die Sensoranordnung zumindest zwei Ausgangssignale (AS6, AS7) liefert.

16. Elektromotorischer Hilfsantrieb nach Anspruch 15, **dadurch gekennzeichnet, dass** die Sensoranordnung zur Festlegung mehrerer Zeit-Winkel-Abhängigkeiten mehr als zwei Sensorelemente (6, 7) aufweist und/oder mehr als zwei Ausgangssignale (AS6, AS7) ausgibt.

**Revendications**

1. Entraînement auxiliaire par moteur électrique pour véhicules, par exemple moteur d'essuie-glace (2), avec un arbre (1) entraîné de façon circulaire dans un sens de rotation (A) lorsque l'entraînement est mis en marche et avec un agencement de capteur pour reconnaître la position de rotation de l'arbre (1), **caractérisé en ce que** l'agencement de capteur, qui présente au moins un élément capteur (6, 7) agissant en association avec un champ magnétique d'au moins un aimant permanent (4), avec un arbre rotatif (1) et avec un mouvement relatif ainsi induit entre l'au moins un aimant permanent (4) et l'au moins un élément capteur (6, 7), émet des signaux de sortie déphasés ou décalés dans le temps (AS6, AS7)
et **en ce qu'**un dispositif de commande (8) est fourni, qui détermine, en tenant compte du déphasage des signaux de sortie (AS6, AS7) ou d'un intervalle de temps correspondant au déphasage d'événements récurrents (IP6, IP7 ; T6.1, T6.2, T1.1, T1.2) se produisant dans les signaux de sortie (AS6, AS7), l'intervalle de temps (tAPP1, tAPP2) correspondant à une position angulaire arbitraire (WPs) du mouvement de rotation de l'arbre des événements récurrents d'au moins un signal de sortie (AS6, AS7) de l'élément capteur (6, 7) ou provenant d'une position angulaire initiale (WP1),
une manivelle (3) étant fixée à l'arbre (1), et la manivelle (3) étant continuellement entraînée dans un sens lorsque le moteur d'essuie-glace (2) est activé.

2. Entraînement auxiliaire par moteur électrique selon la revendication 1, **caractérisé en ce que** l'agencement de capteur présente au moins deux éléments capteurs (6, 7).

**3.** Entraînement auxiliaire par moteur électrique selon la revendication 1 ou 2, **caractérisé en ce que** l'agencement de capteur présente au moins un aimant permanent (4), dont le champ magnétique, au moins dans sa partie agissant en association avec l'au moins un élément capteur (6, 7), présente au moins deux zones de polarité magnétique et/ou de force magnétique différentes et/ou au moins une zone avec une force magnétique changeant au moins une fois.

**4.** Entraînement auxiliaire par moteur électrique selon l'une des revendications ci-dessus, **caractérisé en ce que** l'agencement de capteur présente au moins un aimant permanent (4) qui forme au moins une transition polaire.

**5.** Entraînement auxiliaire par moteur électrique selon l'une des revendications ci-dessus, **caractérisé en ce que** l'appareil de commande (8) détermine l'intervalle de temps ($t_{APP1}$, $t_{APP2}$) correspondant à la position angulaire arbitraire ($WP_B$) du mouvement rotatif de l'arbre des événements récurrents d'au moins un signal de sortie (AS6, AS7) d'un élément capteur (6, 7) ou de la position angulaire initiale ($WP_1$) en tenant compte d'un intervalle angulaire spatial ($\alpha$) entre les au moins deux éléments capteurs (6, 7) et/ou les au moins deux zones de polarité magnétique et/ou de force magnétique différentes et/ou d'au moins deux transitions polaires.

**6.** Entraînement auxiliaire par moteur électrique selon la revendication 5, **caractérisé en ce que** le dispositif de commande (8) pour l'établissement de l'intervalle angulaire ($\alpha$) entre les au moins deux éléments capteurs (6, 7) et/ou entre les au moins deux zones de polarité magnétique et/ou de force magnétique différentes et/ou entre les au moins deux transitions polaires est formé de l'intervalle de temps ($t_{A1}$, $t_{A2}$) des événements récurrents (IP6, IP7 ; $T_{6.1}$, $T_{6.2}$, $T_{7.1}$, $T_{7.2}$) des au moins deux signaux de sortie (AS6, AS7) des éléments capteurs (6, 7) et en tenant compte d'une période de cycle ($T_{Cycle}$) qui correspond à la durée du cycle ou à l'intervalle de temps de deux événements séquentiels (IP6, IP7 ; $T_{6.1}$, $T_{6.2}$, $T_{7.1}$, $T_{7.2}$) dans le signal de sortie (AS6, AS7) d'un seul et même élément capteur (6, 7) ou d'un multiple de celui-ci.

**7.** Entraînement auxiliaire par moteur électrique selon l'une des revendications ci-dessus, **caractérisé en ce que** le dispositif de commande (8) pour la détermination de l'intervalle de temps ($t_{APP1}$, $t_{APP2}$) correspondant à la position angulaire arbitraire ($WP_B$) du mouvement de rotation de l'arbre (1) est formé des événements récurrents (IP6, IP7 ; $T_{6.1}$, $T_{6.2}$,

$T_{7.1}$, $T_{7.2}$) des signaux de sortie (AS6, AS7).

**8.** Entraînement auxiliaire par moteur électrique selon l'une des revendications ci-dessus, **caractérisé en ce que** le dispositif de commande (8) pour la détermination de l'intervalle de temps correspondant à la position angulaire arbitraire ($WP_B$) du mouvement de rotation de l'arbre (1) est formé des événements récurrents (IP6, IP7 ; $T_{6.1}$, $T_{6.2}$, $T_{7.1}$, $T_{7.2}$) dans le signal de sortie (AS6, AS7) d'au moins un élément capteur (6, 7) et notamment en tenant compte du temps de cycle ($t_{Cycle}$) de l'intervalle de temps entre deux événements récurrents de type différent dans un seul et même signal de sortie (AS6, AS7) et du déphasage ou de l'intervalle de temps ($t_{A1}$, $t_{A2}$) présenté par deux événements chronologiquement séquentiels de type identique ou différent (IP6, IP7 ; $T_{6.1}$, $T_{6.2}$, $T_{7.1}$, $T_{7.2}$) dans les différents signaux de sortie (AS6, AS7).

**9.** Entraînement auxiliaire par moteur électrique selon l'une des revendications précédentes, **caractérisé en ce que** le signal de sortie (AS6, AS7) d'au moins un élément capteur (6, 7) est un signal de type impulsionnel avec des impulsions (IP6, IP7) et **en ce que** les événements récurrents sont ces impulsions ou leurs fronts avant et/ou arrière.

**10.** Entraînement auxiliaire par moteur électrique selon l'une des revendications ci-dessus, **caractérisé en ce que** le signal de sortie (AS6, AS7) d'au moins un élément capteur (6, 7) est un signal changeant de niveau et **en ce que** l'événement récurrent dans le signal de sortie (AS6, AS7) d'au moins un élément capteur (6, 7) est présent lorsque le niveau de ce signal de sortie dépasse vers le haut et/ou dépasse vers le bas une valeur seuil (SW).

**11.** Entraînement auxiliaire par moteur électrique selon l'une des revendications ci-dessus, **caractérisé en ce que** les événements du même type sont respectivement le front avant ou arrière des impulsions (IP6, IP7) et/ou les cas de dépassement vers le haut ou vers le bas de la valeur seuil (SW) du signal de sortie (AS6, AS7).

**12.** Entraînement auxiliaire par moteur électrique selon l'une des revendications ci-dessus, **caractérisé en ce qu'**au moins un élément capteur est un capteur Hall (6, 7).

**13.** Entraînement auxiliaire à moteur électrique selon l'une des revendications ci-dessus, **caractérisé en ce que**, en cas d'exécution de l'entraînement auxiliaire (2) comme entraînement d'essuie-glace de pare-brise pour un mouvement de pivotement d'au moins un bras d'essuie-glace entre deux positions de retour ou de rotation d'un mouvement de pivotement, l'agencement de capteur est conçu et/ou disposé de sorte que les événements récurrents (IP6 ; $T_{6.1}$, $T_{6.2}$) dans le signal de sortie (AS6) d'un élément capteur (6) correspondent respectivement à une position de rotation du bras d'essuie-glace ou à une position angulaire du mouvement de pivotement du bras d'essuie-glace ou du mouvement de rotation de l'arbre (1) décalée d'un degré d'angle par rapport à cette position de rotation.

14. Entraînement auxiliaire par moteur électrique selon l'une des revendications précédentes, **caractérisé en ce que** l'arbre est l'arbre de sortie (1) de l'entraînement (2) équipé d'une manivelle (3) par exemple.

15. Entraînement auxiliaire par moteur électrique selon l'une des revendications précédentes, **caractérisé en ce que** l'agencement de capteur fournit au moins deux signaux de sortie (AS6, AS7).

16. Entraînement auxiliaire par moteur électrique selon la revendication 15, **caractérisé en ce que** l'agencement de capteur pour l'établissement de plusieurs dépendances temps-angle présente plus de deux éléments capteurs (6, 7) et/ou émet plus de deux signaux de sortie (AS6, AS7).

Fig. 1

Fig. 2

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1577182 A